# EUROPÄISCHE PATENTSCHRIFT

(11) **EP 0 567 482 B1**
(45) Veröffentlichungstag und Bekanntmachung des Hinweises auf die Patenterteilung: **13.07.1994**
(21) Anmeldenummer: 92902126.9
(22) Anmeldetag: 10.01.1992
(51) Int. Cl.: G01L 9/00

(54) **DRUCKSENSOR**
PRESSURE SENSOR
DETECTEUR DE PRESSION

(30) Priorität: 14.01.1991 DE 4100868
(43) Veröffentlichungstag der Anmeldung: 03.11.1993
(73) Patentinhaber: FRAUNHOFER-GESELLSCHAFT ZUR FÖRDERUNG DER ANGEWANDTEN FORSCHUNG E.V., 80636 München (DE); Plöchinger, Heinz, Dipl.-Ing., 82319 Starnberg (DE)
(72) Erfinder: PLÖCHINGER, Heinz, D-8130 Starnberg (DE); OFFEREINS, Henderikus, L., D-8859 Weichering-Lichtenau (DE); SANDMAIER, Hermann, D-8384 Simbach (DE)
(74) Vertreter: Schoppe, Fritz, Dipl.-Ing.
(86) Internationale Anmeldenummer: DE9200016
(87) Internationale Veröffentlichungsnummer: WO9212408

(56) Entgegenhaltungen:
- EP-A- 0 373 536
- DE-A- 2 706 505
- GB-A- 2 118 724
- US-A- 4 600 912

## Beschreibung

Die vorliegende Erfindung bezieht sich auf einen Drucksensor gemäß dem Oberbegriff der Patentansprüche 1 und 2.

Drucksensoren der eingangs genannten Art sind typischerweise als Absolutdrucksensoren eingesetzt und werden in der Regel aus Halbleitermaterialien mittels ätztechnischer Verfahren hergestellt. Bei Drucksensoren der eingangs genannten Art ist der erste Sensorkörper derart angeordnet, daß die Rückseite des Membranbereiches zum Meßmedium gerichtet ist, während deren Vorderseite mit Wandlerelementen versehen ist, die geschützt in dem Drucksensorhohlraum liegen, der als Referenzdruckkammer oder als Vakuumkammer ausgeführt sein kann.

Bei bekannten Drucksensoren dieser Art ist der Abstand der Wände des ersten Sensorkörpers, welche den Drucksensorhohlraum festlegen, in dem an den Membranbereich angrenzenden Bereich typischerweise ebenso groß wie die laterale Erstreckung der ersten, rückseitigen Ätzausnehmung des ersten Sensorkörpers zwischen den Ätzkerben, die den Übergang des Membranbereiches zu dem sogenannten Bulkmaterial des ersten Sensorkörpers festlegen. Es hat sich gezeigt, daß derartige Drucksensorstrukturen nur eine relativ geringe Überlastfestigkeit haben.

Die US-A-3,537,318 zeigt einen aus Metall fertigbaren Drucksensor, der ein Sensorgehäuse mit einer zentrisch angeordneten Begrenzungsschraube hat, gegen die sich die Membran des Drucksensors im Überlastfall in ihrem Mittenbereich anlegen kann.

Die DE-A-38 24 224 zeigt ein Dehnungsmeßgerät mit einem Saphir-Einkristallchip, welcher mit einer Ausnehmung einem höheren Druckbereich und mit einer flachen Rückseite einem niedrigeren Druckbereich für eine Druckdifferenzmessung zugewandt ist. Der rückseitige Bereich liegt auf einer ringförmigen Basis auf, deren Innendurchmesser größer als der Durchmesser der Ausnehmung des Saphir-Einkristallchips ist.

Die DE-A-32 19 404 zeigt einen Druckaufnehmer mit einer zwischen Flanschen eingespannten Membran, welche über eine Rippe im Innenbereich eines Flansches zur Verringerung der Hysterese bei der Druckmessung gegen den zu messenden Druck vorgespannt ist. Bei dieser aus Metall bestehenden, dreiteiligen Struktur können die eingangs geschilderten Probleme, mit denen sich die Erfindung befaßt, nicht auftreten.

Die GB-A-21 18 724 zeigt verschiedene Drucksensorstrukturen, welche einen Körper mit einer Ausnehmung auf einer Seite in Form einer gekrümmten Oberfläche und ein Halbleiterelement umfassen, das auf der einen Seite dieses Körpers angebracht ist. Bei diesen Strukturen soll eine verbesserte Überlastfestigkeit dadurch erreicht werden, daß sich im Überlastfall eine Membran gegen die gekrümmte Oberfläche anlegen kann.

Die EP-A-94 446 zeigt einen konventionellen Druckaufnehmer mit einer eingespannten Membran, die aus Metall besteht. Ein Überlastanschlag für die Mebran wird durch eine Schraube in der Membranmitte gebildet.

Aus der US-A-33 53 410 ist ein aus Metallteilen zusammengesetzter Druckwandler bekannt, dessen zylindrische Membran mit einem Anschlagkörper im Überlastfall abgestützt wird.

Aus der DE-A-39 40 709 ist ein Druckaufnehmer bekannt, der aus einem Plattenkörper besteht, auf den ein Abstandsring aufgebracht ist, der von einer Membran überspannt wird. In dem zwischen dem Plattenkörper und der Membran gebildeten Drucksensorhohlraum ist ein innerer Ring auf der Platte vorgesehen, der einen gegenüber der Platte geringen Durchmesser hat. Dieser innere Ring bildet eine für hohe Drücke wirksame Anlagefläche zur Reduktion der wirksamen Membranfläche. Hierdurch soll lediglich der Druckmeßbereich des Druckaufnehmers erweitert werden.

Die DE-A-19 06 026 zeigt ein Manometer, welches zwei Gehäuseteile und eine dazwischen angeordnete Wellmembran umfaßt. Die Membran besteht aus einem Blech. Die Gehäuseteile bilden Anschlagflächen für die Membran.

Aus der EP-A-0373536 ist ein überlastfester kapazitiver Drucksensor bekannt, der eine Grundplatte aufweist, auf der ein kreisringförmiger Stützring angeordnet ist. Der Randbereich des Stützringes krägt einen Glaslotring zur Befestigung einer den Glaslotring überdeckenden Membran, die aus einem Keramikwerkstoff besteht. Der Stützring legt einen inneren kreisförmigen Freiraum fest, dessen Durchmesser etwa halb so groß ist wie der durch den Glaslotring festgelegte freie Membrandurchmesser. Der Stützring dient zur Abstützung eines mittleren ringförmigen Membranbereiches bei Auftreten eines hohen Überlastdruckes, der die Membran gegen den Stützring sowie gegen die vom Stützring freigelassene mittige Bodenfläche der Grundplatte anpreßt.

Daher liegt ausgehend von diesem Stand der Technik der vorliegenden Erfindung die Aufgabe zugrunde, einen Drucksensor der eingangs genannten Art so weiterzubilden, daß dessen Überlastfestigkeit weiter erhöht wird.

Diese Aufgabe wird durch einen Drucksensor gemäß Patentanspruch 1 bzw. 2 gelöst.

Der Erfindung liegt die Erkenntnis zugrunde, daß die unzureichende Überlastfestigkeit von bekannten Drucksensoren mit der eingangs erläuterten Struktur im wesentlichen darauf zurückzuführen ist, daß der erste Sensorkörper im Bereich der Kerbe der ersten rückseitigen Ausnehmung, welche die Membran festlegt, mit Zugspannungen beaufschlagt wird, die im Überlastfall zu einem Bruch des ersten Sensorkörpers ausgehend von der durch die erste rückseitige Ausnehmung festgelegten Kerbseite des Membranbereiches führt.

Durch die erfindungsgemäße Anordnung von Überlastanlageeinrichtungen für den Membranbereich wird erreicht, daß im Überlastfall eine Verformung des Membranbereiches an der durch die erste rückseitige Ausnehmung festgelegten Kante mit Druckspannungen und nicht mehr mit Zugspannungen erfolgt. Hierdurch erreicht die erfindungsgemäße Drucksensorstruktur eine Beständigkeit gegen Überlastdrücke, die mehr als den Faktor 100 oberhalb der Meßdrücke liegen. Damit wird die Überlastfestigkeit der erfindungsgemäßen Drucksensorstruktur gegenüber der Überlastfestigkeit bekannter Drucksensorstrukturen um mehr als den Faktor 10 verbessert.

Bevorzugte Ausführungsbeispiele der vorliegenden Erfindung werden nachfolgend unter Bezugnahme auf die beiliegenden Zeichnungen näher erläutert.

Es zeigen:

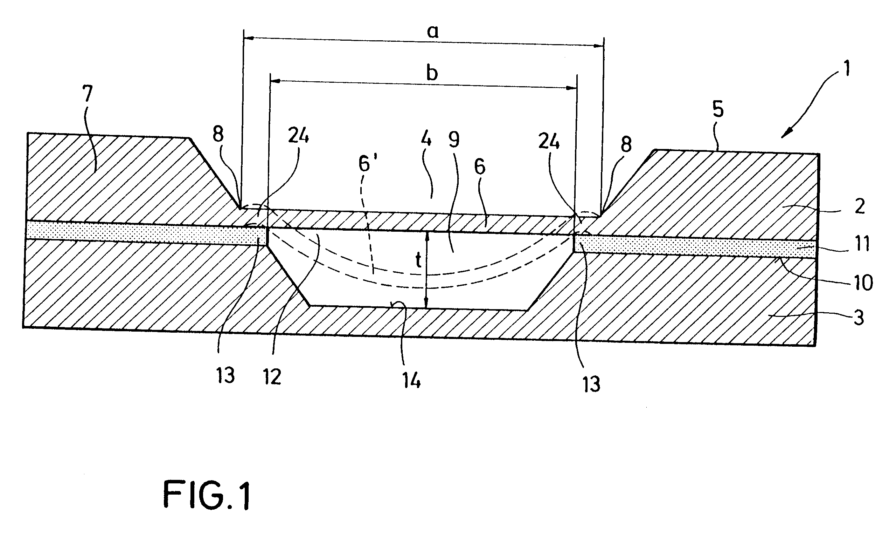

- Fig. 1 bis 5: Querschnittsdarstellungen einer ersten bis fünften Ausführungsform des erfindungsgemäßen Drucksensors.

Der erfindungsgemäße Drucksensor, der in Fig. 1 in seiner Gesamtheit mit dem Bezugszeichen 1 bezeichnet ist, umfaßt einen ersten Sensorkörper 2 und einen zweiten Sensorkörper 3. Der erste Sensorkörper 2 hat eine erste rückseitige Ätzausnehmung 4 die in an sich bekannter Weise durch anisotropes Ätzen ausgehend von einer Rückseite 5 zur Festlegung eines Membranbereiches 6 gebildet ist. Das Bulkmaterial 7 des ersten Sensorkörpers 2 weist daher eine den Membranbereich 6 umschließende Ätzkerbe 8 auf.

Der zweite Sensorkörper 3 hat gleichfalls eine zweite, rückseitige Ätzausnehmung 9, die sich von der Rückseite 10 des zweiten Sensorkörpers erstreckt. Der erste Sensorkörper 2 ist mit dem zweiten Sensorkörper 3 mittels an sich in der Sensorik bekannten Verbindungstechniken verbunden. Hierzu kommt vor allem das sogenannte Anodic-Bonding und das Silicon-Fusion-Bonding in Betracht, wenn man, wie dies bei dem bevorzugten Ausführungsbeispiel der Fall ist, die Sensorkörper 2, 3 aus Silizium-Wafern durch Ätzen herstellt.

Bei diesen Verbindungstechniken wird eine Zwischenschicht 11 eingesetzt, die beispielsweise aus Pyrex-Glas oder aus Siliziumoxid bestehen kann.

Wie in Fig. 1 verdeutlicht ist, bildet der an den Drucksensorhohlraum 12 angrenzende Randbereich 13 der Zwischenschicht 11 ein Auflager für den Membranbereich 6 an dessen Rand 24. Die Randbereiche 13 haben einen kleineren gegenseitigen Abstand b in Membranrichtung als die Lateralerstreckung a des Membranbereiches 6 zwischen den Ätzkerben 8. Mit anderen Worten sind die Randbereiche 13, die das Auflager für den Membranrand bilden, bezogen auf die Lateralerstreckung a des Membranbereiches, welcher durch die erste Ätzausnehmung 4 festgelegt ist, zur Mitte des Membranbereiches 6 hin versetzt. Bei einer druckbedingten Durchbiegung des Membranbereiches, der in seinem durchgebogenen Zustand gestrichelt dargestellt und mit dem Bezugszeichen 6′ bezeichnet ist, kommt es im Bereich der Ätzkerben 8 zu Druckspannungen, so daß der Membranbereich an seinem besonders gefährdeten Übergang zum Bulkmaterial 7 des ersten Sensorkörpers 2 entlastet wird.

Die Tiefe t des Drucksensorhohlraumes ist vorzugsweise derart festgelegt, daß der Membranbereich 6 sich zumindest im Bereich seiner Mitte im Überlastfall gegen den Bodenbereich 14 des Drucksensorhohlraumes 12 anlegt.

Bei dem in Fig. 1 gezeigten Ausführungsbeispiel kann die Durchbiegung des Membranbereiches 6 kapazitiv erfaßt werden. Dies kann entweder dadurch erfolgen, daß die Kapazität der leitfähig dotierten Sensorkörper 2, 3, die durch die nichtleitfähige Zwischenschicht 11 beabstandet sind, erfaßt wird, oder dadurch, daß der Membranbereich 6 und der Bodenbereich 14 mit Elektroden versehen sind, die zur kapazitiven Erfassung der Membranbereichsdurchbiegung dienen.

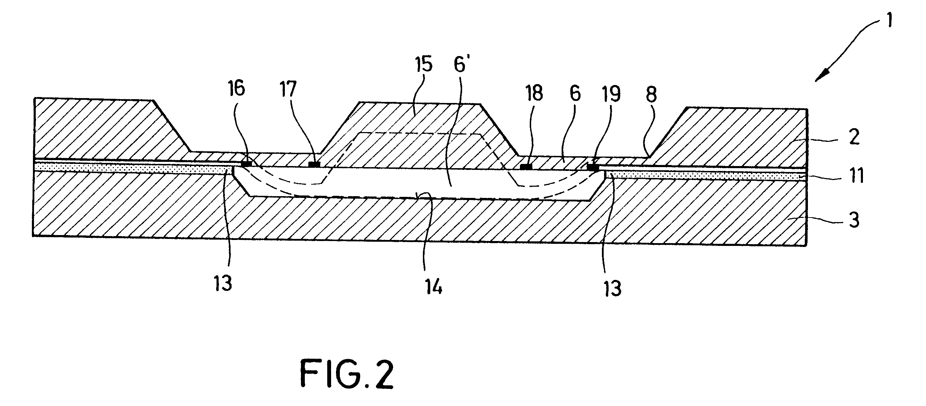

Die nachfolgend erläuterten Ausführungsbeispiele gemäß den Fig. 2 bis 5 stimmen mit Ausnahme der nachfolgend erwähnten Unterschiede mit dem Ausführungsbeispiel des erfindungsgemäßen Drucksensors nach Fig. 1 überein, so daß eine erneute Beschreibung gleicher oder ähnlicher Teile, die mit den in Fig. 1 bereits verwendeten Bezugszeichen bezeichnet sind, unterbleiben kann.

Bei der Ausführungsform gemäß Fig. 2 weist der Membranbereich 6 einen Versteifungskörper 15 auf, der dazu beiträgt, die Erfassungsempfindlichkeit der Membrandurchbiegung durch piezoresistive Elemente 16, 17, 18, 19 zu erhöhen.

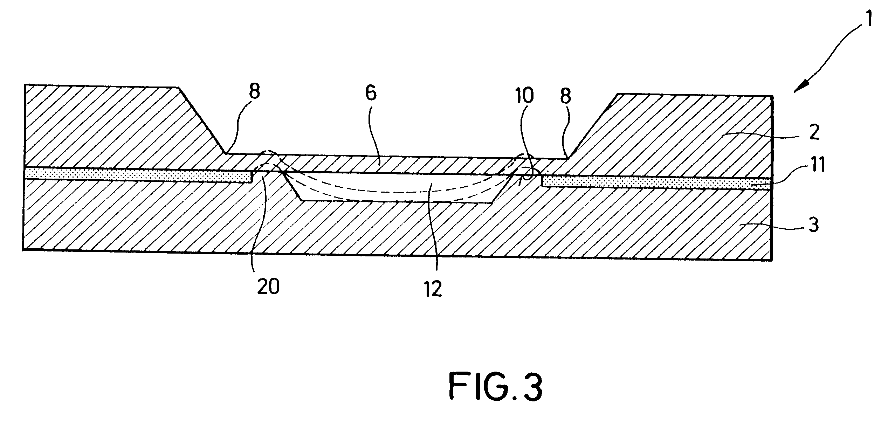

In weiterer Abwandlung zu dem ersten Ausführungsbeispiel gemäß Fig. 1 sind bei dem dritten Ausführungsbeispiel des Drucksensors 1 gemäß Fig. 3 der erste und zweite Sensorkörper 2, 3 lediglich durch eine Zwischenschicht 11 miteinander verbunden, die nicht bis an den Drucksensorhohlraum 12 heranreicht. Bei dieser Ausgestaltung des erfindungsgemäßen Drucksensors wird die Auflageeinrichtung für den Membranbereich 6 durch einen Auflagerand 20 des zweiten Sensorkörpers 2 gebildet, der mit der Rückseite 10 des zweiten Sensorkörpers 3 an die Vorderseite des Membranbereiches 6 angrenzt und den Drucksensorhohlraum 12 umschließt. Bei diesem Ausführungsbeispiel erstreckt sich also die Zwischenschicht 11 von den Randbereichen der beiden Sensorkörper 2, 3 lediglich bis zu dem Auflagerand 20, so daß der Membranbereich 6 im Bereich des Auflagerandes 20 zwar an den zweiten Sensorkörper anliegt, nicht jedoch mit diesem verbunden ist. Diese Art der Ausgestaltung der Überlastanlageeinrichtung führt zu einer weiteren Verminderung von Zugspannungen aufgrund der bei Biegung auftretenden Druckspannungen im Bereich der Ätzkerben 8.

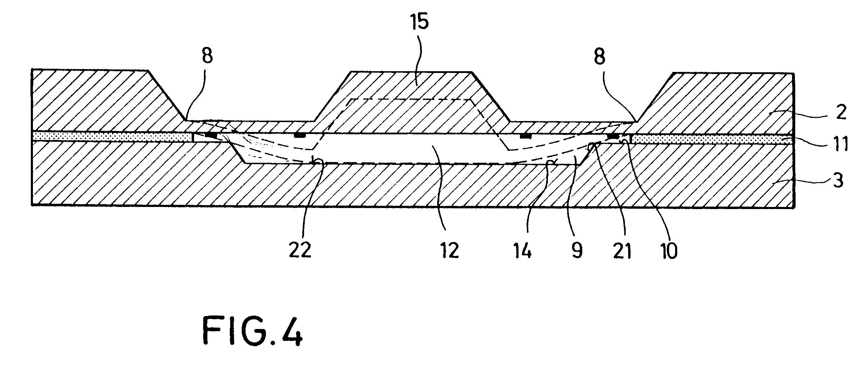

Bei dem vierten Ausführungsbeispiel gemäß Fig. 4 erstreckt sich im Gegensatz zu dem Ausführungsbeispiel von Fig. 2 die Zwischenschicht 11 nicht bis zur Kante 21 der zweiten Ätzausnehmung 9 mit der Rückseite 10 des zweiten Sensorkörpers 3, sondern bleibt in Lateralrichtung gegenüber der Kante 21 weiter vom Drucksensorhohlraum 12 beabstandet. Diese Ausgestaltung der erfindungsgemäßen Drucksensorstruktur führt zu einer genauen Festlegbarkeit der Biegelinie des Membranbereiches 6 ausgehend von dessen Rand bei den Ätzkerben 8 über die als Überlastanlageeinrichtung dienenden Kanten 21 bis zu einem Kontaktbereich 22, an dem der (hier verstärkt ausgebildete) Membranbereich 6 am Bodenbereich 14 der zweiten Ätzausnehmung 9 anliegt.

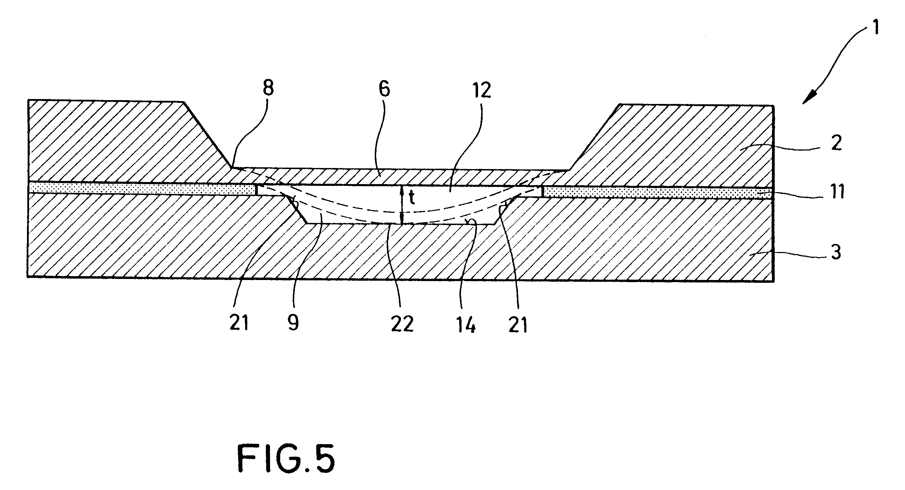

Das Ausführungsbeispiel gemäß Fig. 5 stimmt bezüglich der Erstreckung der Zwischenschicht 11 und bezüglich der Ausgestaltung der Kante 21 als Überlastanlageeinrichtung für den Membranbereich 6 mit dem Ausführungsbeispiel gemäß Fig. 4 überein, wobei jedoch hier kein verstärkter Membranbereich mit einem Verstärkungskörper 15 vorgesehen ist, da die Biegungserfassung bei dem Ausführungsbeispiel gemäß Fig. 5 kapazitiv erfolgen soll. Bei dem fünften Ausführungsbeispiel gemäß Fig. 5 ist ebenfalls verdeutlicht, daß wiederum die Tiefe t des Drucksensorhohlraumes 12 so gewählt sein soll, daß der Membranbereich 6 an einem Kontaktbereich 22 mit dem Bodenbereich 14 der zweiten Ätzausnehmung 9 im Überlastfall zur Anlage kommt.

Bei ätztechnischer Strukturierung kommt sowohl isotropes wie auch anisotropes Ätzen in Betracht.

## Patentansprüche

1. Drucksensor
mit zwei aus einem Halbleitermaterial durch Ätztechnik hergestellten Sensorkörpern (2, 3),
von denen der erste Sensorkörper (2) einen sich zwischen Ätzkerben (8) einer ersten, rückseitigen Ausnehmung (4) erstreckenden Membranbereich (6) aufweist, und
von denen der zweite Sensorkörper (3) eine zweite, rückseitige Ausnehmung (9) aufweist und mit seiner Rückseite (10) mit der Vorderseite des ersten Sensorkörpers (2) mittels einer Verbindungszwischenschicht (11) zur Bildung eines unter dem Membranbereich (6) liegenden Drucksensorhohlraumes (12) verbunden ist,
dadurch gekennzeichnet,
daß die zweite, rückseitige Ausnehmung (9) mit der Vorderseite des zweiten Sensorkörpers (3) Kanten (21) bildet, wobei der durch die zweite Ausnehmung (9) zwischen den Kanten (21) festgelegte Abstand (b) in Membranrichtung kleiner ist als die Lateralerstreckung (a) des Membranbereiches (6) zwischen den Ätzkerben (8) der ersten, rückseitigen Ausnehmung (4) des ersten Sensorkörpers (2),
daß die Sensorkörper (2, 3) derart zueinander angeordnet sind, daß die Kanten (21) der zweiten Ausnehmung (9) bezüglich der Ätzkerbe (8) zur Mitte des Membranbereiches (6) versetzt sind, und
daß sich die Verbindungszwischenschicht (11) zwischen den Sensorkörpern (2, 3) in Richtung des Drucksensorhohlraumes (12) über die Ätzkerben (8) hinaus erstreckt, um den den Ätzkerben (8) benachbarten Randbereich (24) des Membranbereichs (6) gegenüber dem zweiten Sensorkörper (3) festzulegen.

2. Drucksensor
mit zwei aus einem Halbleitermaterial durch Ätztechnik hergestellten Sensorkörpern (2, 3),
von denen der erste Sensorkörper (2) einen sich zwischen Ätzkerben (8) einer ersten, rückseitigen Ausnehmung (4) erstreckenden Membranbereich (6) aufweist, und
von denen der zweite Sensorkörper (3) eine zweite, rückseitige Ausnehmung (9) aufweist und mit seiner Rückseite (10) mit der Vorderseite des ersten Sensorkörpers (2) mittels einer Verbindungszwischenschicht (11) zur Bildung eines unter dem Membranbereich (6) liegenden Drucksensorhohlraumes (12) verbunden ist,
dadurch gekennzeichnet,
daß die zweite, rückseitige Ausnehmung (9) mit der Vorderseite des zweiten Sensorkörpers (3) Kanten (21) bildet, wobei der durch die zweite Ausnehmung (9) zwischen den Kanten (21) festgelegte Abstand (b) in Membranrichtung kleiner ist als die Lateralerstreckung (a) des Membranbereiches (6) zwischen den Ätzkerben (8) der ersten, rückseitigen Ausnehmung (4) des ersten Sensorkörpers (2),
daß die Sensorkörper (2, 3) derart zueinander angeordnet sind, daß die Kanten (21) der zweiten Ausnehmung (9) bezüglich der Ätzkerbe (8) zur Mitte des Membranbereiches (6) versetzt sind, und
daß die Verbindungszwischenschicht (11) gegenüber den Kanten (21) in Richtung der Ätzkerbe (8) beabstandet ist, so daß
- der Rand (24) des Membranbereiches (6) zumindest bei Beaufschlagung des Membranbereiches (6) mit einem den Meßdruck überschreitenden Überlastdruck gegen die Kanten (21) zur Anlage kommt, und
- bei einer derartigen Überlastdruckbeaufschlagung eine solche Durchbiegung des der Ätzkerbe (8) benachbarten Teiles des Membranbereiches (6) hervorgerufen wird, daß der Membranbereich (6) im Bereich der Ätzkerbe (8) durch diese Durchbiegung entlastet wird.

3. Drucksensor nach Anspruch 2, dadurch gekennzeichnet,
daß die Kanten (21) im ungebogenen Zustand des Membranbereiches (6) von diesem um die Stärke der Zwischenschicht (11) beabstandet sind.

4. Drucksensor nach Anspruch 2, dadurch gekennzeichnet,
daß die Kanten (21) im ungebogenen Zustand des Membranbereiches (6) an diesem anliegen.

5. Drucksensor nach Anspruch 1 oder 2, dadurch gekennzeichnet,
daß der zweite Sensorkörper (3) einen den Drucksensorhohlraum (12) umfassenden Auflagerand (20) aufweist, der in dem ungebogenen Zustand des Membranbereiches (6) an diesem anliegt.

6. Drucksensor nach Anspruch 5, dadurch gekennzeichnet,
daß die Zwischenschicht (11) bezogen auf den Drucksensorhohlraum (12) außerhalb des Auflagerandes (20) zwischen den Sensorkörpern (2, 3) angeordnet ist.

7. Drucksensor nach einem der Ansprüche 1 bis 6, dadurch gekennzeichnet,
daß die Tiefe (t) des Drucksensorhohlraumes (12) senkrecht zu der Membranebene derart gering ist, daß der Membranbereich (6) sich zumindest in seiner Mitte im Überlastfall gegen einen Bodenbereich (14) des Drucksensorhohlraumes (12) anlegt.

## Claims

1. A pressure sensor comprising
two sensor bodies (2, 3) produced from a semiconductor material by means of etching,
the first sensor body (2) thereof being provided with a diaphragm region (6) extending between etch notches (8) of a first, rear recess (4), and
the second sensor body (3) thereof including a second, rear recess (9) and having its back (10) connected to the front of the first sensor body (2) by means of an intermediate connection layer (11) so as to form a pressure sensor cavity (12) located below the diaphragm region (6),
characterized in
that the second rear recess (9) forms edges (21) together with the front of the second sensor body (3), the distance (b) defined between the edges (21) by the second recess (9) being, in the direction of the diaphragm, smaller than the lateral dimensions (a) of the diaphragm region (6) between the etch notches (8) of the first, rear recess (4) of the first sensor body (2),
that the sensor bodies (2, 3) are arranged relative to each other in such a way that the edges (21) of the second recess (9) are displaced towards the centre of the diaphragm region (6) relative to the etch notch (8), and
that the intermediate connection layer (11) extends between the sensor bodies (2, 3) in the direction of the pressure sensor cavity (12) beyond the etch notches (8) so as to fix the diaphragm region edge portions (24), which are located adjacent to the edge notches (8), relative to the second sensor body (3).

2. A pressure sensor comprising
two sensor bodies (2, 3) produced from a semiconductor material by means of etching,
the first sensor body (2) thereof being provided with a diaphragm region (6) extending between etch notches (8) of a first, rear recess (4), and
the second sensor body (3) thereof including a second, rear recess (9) and having its back (10) connected to the front of the first sensor body (2) by means of an intermediate connection layer (11) so as to form a pressure sensor cavity (12) located below the diaphragm region (6),
characterized in
that the second rear recess (9) forms edges (21) together with the front of the second sensor body (3), the distance (b) defined between the edges (21) by the second recess (9) being, in the direction of the diaphragm, smaller than the lateral dimensions (a) of the diaphragm region (6) between the etch notches (8) of the first, rear recess (4) of the first sensor body (2),
that the sensor bodies (2, 3) are arranged relative to each other in such a way that the edges (21) of the second recess (9) are displaced towards the centre of the diaphragm region (6) relative to the etch notch (8), and
that the intermediate connection layer (11) ends in spaced relationship with the edges (21) in the direction of the etch notch (8) so that
- at least if an overload pressure exceeding the measurement pressure is applied to the diaphragm region (6), the edge (24) of the diaphragm region (6) will abut on the edges (21), and so that
- the application of such an overload pressure will cause the part of the diaphragm region (6) bordering on the etch notch (8) to undergo a deflection of such a nature that the diaphragm region (6) will be relieved in the area of the etch notch (8) due to this deflection.

3. A pressure sensor according to claim 2, characterized in
that, in the unbent condition of the diaphragm region (6), the edges (21) are positioned at a distance from said diaphragm region which corresponds to the thickness of the intermediate layer (11).

4. A pressure sensor according to claim 2, characterized in
that, in the unbent condition of the diaphragm region (6), the edges (21) abut on said diaphragm region (6).

5. A pressure sensor according to claim 1 or 2, characterized in
that the second sensor body (3) has a supporting margin (20) which encloses the pressure sensor cavity (12) and which, in the unbent condition of the diaphragm region (6), abuts on said diaphragm region.

6. A pressure sensor according to claim 5, characterized in
that, when seen in relation to the pressure sensor cavity (12), the intermediate layer (11) is arranged outside of the supporting margin (20) between the sensor bodies (2, 3).

7. A pressure sensor according to one of the claims 1 to 6, characterized in
that, perpendicularly to the plane of the diaphragm, the depth (t) of the pressure sensor cavity (12) is so small that at least the central area of the diaphragm region (6) will abut on a bottom area (14) of the pressure sensor cavity (12) in the case of overload.

## Revendications

1. Détecteur de pression
avec deux corps de détecteur (2, 3) réalisés en un matériau semi-conducteur par la technique de gravure,
dont le premier corps de détecteur (2) présente une zone de membrane (6) s'étendant entre des encoches de gravure (8) d'un premier évidement (4) du côté arrière, et
dont le second corps de détecteur (3) présente un second évidement (9) du côté arrière et est relié par sa face arrière (10), à l'aide d'une couche intermédiaire de liaison (11), à la face avant du premier corps de détecteur (2), pour former une cavité de détecteur de pression (12) située sous la zone de membrane (6),
caractérisé en ce
que le second évidement (9) du côté arrière forme, avec la face avant du second corps de détecteur (3), des arêtes (21), la distance (b), dans le sens de la membrane, déterminée entre les arêtes (21) par le second évidement (9) étant inférieure à l'extension latérale (a) de la zone de membrane (6) entre les encoches de gravure (8) du premier évidement (4) du côté arrière du premier corps de détecteur (2),
que les corps de détecteur (2, 3) sont disposés l'un par rapport à l'autre de telle manière que les arêtes (21) du second évidement (9) sont décalées, par rapport à l'encoche de gravure (8), vers le centre de la zone de membrane (6), et
que la couche intermédiaire de liaison (11) entre les corps de détecteur (2, 3) s'étend en direction de la cavité de détecteur de pression (12) au-delà des encoches de gravure (8), pour déterminer la zone de bordure (24) de la zone de membrane (6), adjacente aux encoches de gravure (8), par rapport au second corps de détecteur (3).

2. Détecteur de pression
avec deux corps de détecteur (2, 3) réalisés en un matériau semi-conducteur par la technique de gravure,
dont le premier corps de détecteur (2) présente une zone de membrane (6) s'étendant entre des encoches de gravure (8) d'un premier évidement (4) du côté arrière, et
dont le second corps de détecteur (3) présente un second évidement (9) du côté arrière et est relié par sa face arrière (10), à l'aide d'une couche intermédiaire de liaison (11), à la face avant du premier corps de détecteur (2), pour former une cavité de détecteur de pression (12) située sous la zone de membrane (6),
caractérisé en ce
que le second évidement (9) du côté arrière forme, avec la face avant du second corps de détecteur (3), des arêtes (21), la distance (b), dans le sens de la membrane, déterminée entre les arêtes (21) par le second évidement (9) étant inférieure à l'extension latérale (a) de la zone de membrane (6) entre les encoches de gravure (8) du premier évidement (4) du côté arrière du premier corps de détecteur (2),
que les corps de détecteur (2, 3) sont disposés l'un par rapport à l'autre de telle manière que les arêtes (21) du second évidement (9) sont décalées, par rapport à l'encoche de gravure (8), vers le centre de la zone de membrane (6), et
que la couche intermédiaire de liaison (11) est distante des arêtes (21), en direction de l'encoche de gravure (8), de telle sorte
- que le bord (24) de la zone de membrane (6) vient s'appuyer sur les arêtes (21), du moins en cas d'admission à la zone de membrane d'une pression de surcharge excédant la pression de mesure, et
- que, en cas d'une telle admission de pression de surcharge, il est provoqué une flexion de la partie de la zone de membrane (6) adjacente à l'encoche de gravure (8) telle que la zone de membrane (6) est déchargée à l'endroit de l'encoche de gravure (8) par cette flexion.

3. Détecteur de pression suivant la revendication 2, caractérisé en ce que les arêtes (21) sont, à l'état non-courbé de la zone de membrane (6), distantes de celle-ci de l'épaisseur de la couche intermédiaire (11).

4. Détecteur de pression suivant la revendication 2, caractérisé en ce que les arêtes (21) s'appuient, à l'état non-courbé de la zone de membrane (6), sur celle-ci.

5. Détecteur de pression suivant la revendication 1 ou 2, caractérisé en ce que le second corps de détecteur (3) présente un bord d'appui (20), entourant la cavité de détecteur de pression (12), qui, à l'état non-courbé de la zone de membrane (6), s'appuie sur celle-ci.

6. Détecteur de pression suivant la revendication 5, caractérisé en ce que la couche intermédiaire (11) est disposée, par rapport à la cavité de détecteur de pression (12), à l'extérieur du bord d'appui (20) entre les corps de détecteur (2, 3).

7. Détecteur de pression suivant l'une des revendications 1 à 6, caractérisé en ce que la profondeur (t) de la cavité de détecteur de pression (12), perpendiculairement au plan de la membrane, est aussi faible que la zone de membrane (6) s'appuie en cas de surcharge, du moins en son centre, sur une zone de fond (14) de la cavité de détecteur de pression (12).
